# EUROPEAN PATENT APPLICATION

(11) **EP 2 326 072 A1**
(43) Date of publication of application: **25.05.2011**
(21) Application number: 10154413.8
(22) Date of filing: 23.02.2010
(51) Int. Cl.: H04M 3/56, H04L 29/06

(54) **Method and system for transmitting caller identification information in a conference call**

(30) Priority: 24.11.2009 US 592455
(71) Applicant: Mitel Networks Corporation, Ottawa, Ontario K2K 2W7 (CA)
(72) Inventor: Shan, Cheng, Phoenix, AZ 85048 (US)
(74) Representative: Derry, Paul Stefan

(57) **Abstract**

A method and system for transmitting caller identification information during a conference call is disclosed. When a caller enters into a phone conference (302), the endpoint device he is using can subscribe to a notification service (306) provided by the conference server (210). Thereafter, the conference server (210) sends out a message with the phone number (or other indication) of the active endpoint device (308). Each time another endpoint device in conference call becomes the active device (e.g., someone using that endpoint device begins speaking), the conference server senses this and sends a new message (310) to the endpoint devices indicating this change (312).

## Description

### Technical Field

This disclosure generally relates to telephones, and more particularly to conference calling systems.

### Background Art

Caller ID was invented in the late 1960s for use with Plain Old Telephone Service (POTS). As is known in the art, when a telephone rings, Caller ID allows a user to see the phone number of the person who is calling. In such a system, between the first and second ring, a sequence of characters (typically encoded, such as by an FSK technique or other modulation method) is sent from the originating phone to the receiving phone. The receiving phone decodes the incoming signal and displays the dialing phone number on a display located on the handset of the phone.

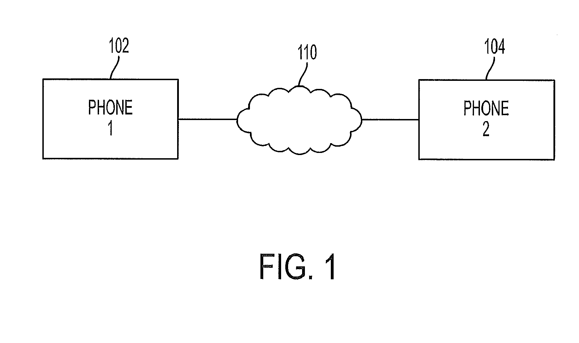

FIG 1 depicts such a conversation. Phone 102 is used to call phone 104 over network 110. Before the user of phone 104 picks up the receiver, he can view the caller ID information on phone 104. A display on phone 102 may show the number that was dialed. Network 110 may be any type of phone network, such as POTS, cellular, satellite, VOIP, or a combination of networks.

While the above-described system works, there are drawbacks to the above-described system. For example, the system described above only works in situations where one person directly calls another person. Thus, it does not work in conference call type situations where there may be more than two parties in a call. It is desirable to have a system and method that fixes these and other shortcomings.

### Brief Description of the Drawings

Implementations will hereinafter be described in conjunction with the appended drawings, where like designations denote like elements, and:
FIG. 1 illustrates a phone call of the prior art;
FIG. 2 depicts several devices contacting a conference server; and
FIG. 3 is a flow chart depicting the operation of an exemplary embodiment.

### Detailed Description

The following descriptions are of exemplary embodiments of particular implementations of a method and system for transmitting caller information and are not intended to limit the scope, applicability or configuration of the claims in any way. Rather, the following descriptions are intended to provide convenient illustrations for implementing various embodiments of a method and system for transmitting caller identification information. As will become apparent, changes may be made in the function and/or arrangement of any of the elements described in the disclosed exemplary embodiments without departing from the spirit and scope of the claims.

Embodiments provide for a method and system for helping a user to identify a speaker during a conference call. On a typical conference call system, there are several ways to join a conference call: a) participants in the conference call each dial a pre-determined, centralized number; b) a conference server dials out to each participant at a pre-scheduled time; and c) started with a two-way call with a third person added later. It should be understood that there may be other ways in which a conference call can be initiated and the present invention is not limited by the manner in which the conference call is initiated.

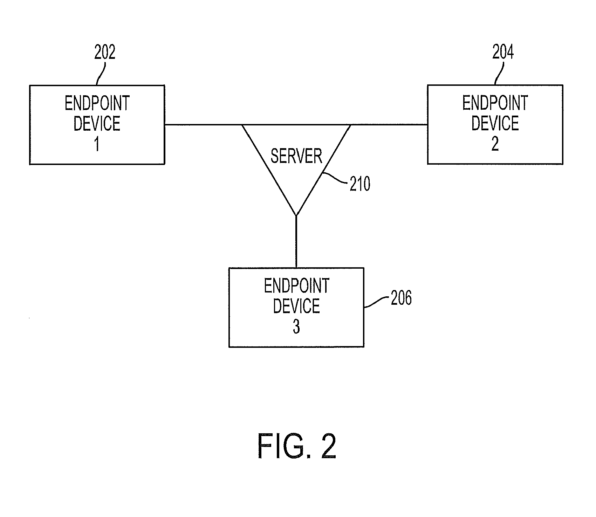

Such a situation is illustrated in FIG 2. Endpoint device 202, endpoint device 204, and endpoint device 206 are used to dial into a conference call. Endpoint devices may be any device used to place a phone call, including an analog telephone; a VOIP telephone; a computer with a headset, camera, or microphone; a cell phone; and the like. Participants to the conference call will use their particular endpoint device to call a conference server 210. On such a system, the number being displayed on each endpoint device's display would be the phone number being called or the number calling in, which is typically the phone number of conference server 210, which may not be the phone number of the person speaking. The participants would thus have no knowledge of the active speaker in the conference. It should be understood that endpoint devices 202, 204, and 206 may not be directly connected to conference server 210, but are coupled via a network, such as a telephone network or the Internet. It should also be understood that there may be one or more intermediate gateways between endpoint devices 202, 204, or 206 and conference server 210. For example, endpoint device 202 may be a cell phone and the cell phone uses a gateway to access conference server 210. It should also be understood that an endpoint device may serve as conference server 210.

In the current art, conference server 210 may have the ability to detect which endpoint device is active in a conference call. This can be done by a variety of different methods. For example, the conference server can detect which endpoint device is producing the loudest signal. Unfortunately, this data is typically not accessible to the participants of the call unless the participant accesses a specific website. However, this solution required the participants to have access to the Internet, have knowledge of the specific website address, and have the capability to read http formatted messages.

An embodiment of the present invention uses a messaging system to transmit caller information from the conference server to the endpoint devices. In one exemplary embodiment, Session Initiation Protocol ("SIP") messages are used to transmit identification information from the conference server to the phones of the participants. SIP SUBSCRIBE and NOTIFY messages can be used to indicate active speaker indication information from the conference server to the endpoint devices.

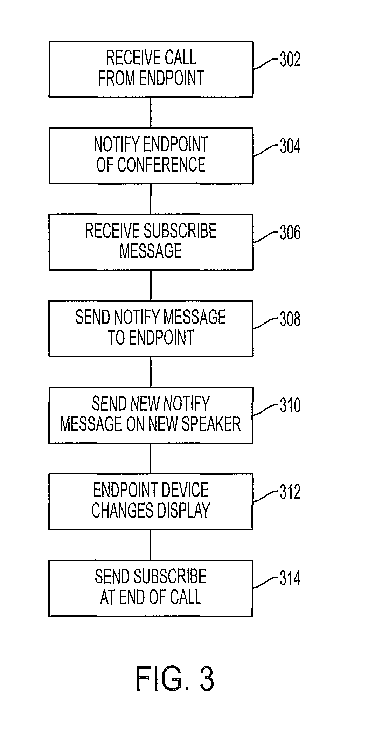

With reference to FIG 3, the steps undertaken in an exemplary embodiment that uses SIP messages are illustrated. At step 302, a conference server connects with an endpoint device for a conference call. As discussed above, this typically occurs by a participant dialing the phone number of the conference server, but it may occur in a variety of other ways (such as the conference serving dialing to the endpoint device). At step 304, the endpoint device is notified that it is in a conference call. This can be done in a variety of different manners. For example, a user can manually input that information at the endpoint device by inputting a predetermined key sequence. Alternatively, the endpoint device may determine it is on a conference call by sensing the number called (or the incoming number, if the conference server dialed the endpoint device). A variety of other different methods, either currently known or developed in the future may also be used to make this determination.

At step 306, the endpoint device sends a SUBSCRIBE message to the conference server. The SUBSCRIBE message requests that the conference server begin sending messages to this particular endpoint device when necessary. After receiving the SUBSCRIBE message, the conference server sends a NOTIFY message to the endpoint device (step 308). The NOTIFY message has an XML body that contains the identification information of the active endpoint device. This identification information may be a phone number, a pre-programmed name, or other custom text. The pre-programmed name or custom text may be entered by a conference participant in any manner currently known or developed in the future. For example, the conference server may sense the phone number of the endpoint device in question using traditional caller ID techniques. The conference server may access a database to associate a phone number with a contact. A conference server may enter in a name or other custom text either using a keypad on the endpoint device, through a web interface, or through other similar means. A conference server may have such information stored in a database based on previous phone calls. Many other techniques may be used to determine the custom text to be displayed.

When the active endpoint device changes (i.e., someone at another endpoint device begins speaking), the conference server sends a new NOTIFY message to each of the endpoint devices that earlier sent a SUBSCRIBE message (step 310). When the endpoint device receives the NOTIFY message, it modifies the display to show the identification information of the new active endpoint device (step 312). These steps may be repeated during the duration of the call, changing the display each time the active endpoint device changes. At the conclusion of the conference call, a SUBSCRIBE message with an "Expires: 0" header is sent to the conference server, signifying the end of the service (step 314).

The above described method is merely exemplary. It should be understood that an embodiment of the invention may use a different messaging system instead of SIP to transmit the information, including messaging systems that currently exist and messaging systems that may be created in the future.

The implementations listed here, and many others, will become readily apparent from this disclosure. From this, those of ordinary skill in the art will readily understand the versatility with which this disclosure may be applied. Implementations of embodiments of the present invention may be constructed of a wide variety of components, including as described above. Those of ordinary skill in the art will readily be able to select appropriate components and manufacture these products from the disclosures provided herein.

It will be understood that implementations are not limited to the specific components disclosed herein, as virtually any components consistent with the intended operation of a method and/or system implementation for a phone system may be utilized. Accordingly, for example, although particular component examples may be disclosed, such components may comprise any shape, size, style, type, model, version, class, grade, measurement, concentration, material, weight, quantity, and/or the like consistent with the intended operation of a method and/or system implementation of embodiments of the present invention may be used.

In places where the description above refers to particular implementations of a caller identification system, it should be readily apparent that a number of modifications may be made without departing from the spirit thereof and that these implementations may be applied to other systems. The presently disclosed implementations are, therefore, to be considered in all respects as illustrative and not restrictive.

## Claims

1. A method comprising:
receiving a request from a first endpoint device to receive identification information;
sending a first message to said first endpoint device, said first message containing identification information; and
sending a second message to said first endpoint device when it is detected that an active speaker in a conference call has changed, said second message containing identification information; wherein
said identification information is associated with an active speaker in said conference call.

2. The method of claim 1 further comprising sending a third message to the endpoint device when it is detected that an active speaker in the call has changed, said third message containing identification information associated with said changed active speaker.

3. The method of claim 1 or claim 2further comprising receiving a call from a first endpoint device.

4. The method of any preceding claim further comprising placing a call to a first endpoint device.

5. The method of any preceding claim further comprising acknowledging said request from the endpoint device.

6. The method of any preceding claim further comprising receiving a call from a second endpoint device.

7. The method of claim 6 further comprising sending said first message to said second endpoint device.

8. The method of any preceding claim further comprising receiving an end of call message from said first endpoint device.

9. The method of any preceding claim wherein said request and said first message are sent using Session Initiation Protocol.

10. The method of claim 9 wherein said request is transmitted using a SUBSCRIBE message;
wherein said first message is transmitted using a NOTIFY message; and
wherein said second message is transmitted using a NOTIFY message.

11. The method of any preceding claim wherein said receiving and sending steps are performed by a conference server.

12. The method of any preceding claim wherein said first endpoint device is a device capable of transmitting and receiving signals representative of audio.

13. The method of claim 12 wherein said first endpoint device is a telephone.

14. The method of claim 12 wherein said first endpoint device is a computer.

15. Apparatus, for instance a conference server, comprising:
means for receiving a request from a first endpoint device to receive identification information;
means for sending a first message to said first endpoint device, said first message containing identification information; and
means for sending a second message to said first endpoint device when it is detected that an active speaker in a conference call has changed, said second message containing identification information; wherein
said identification information is associated with an active speaker in said conference call.
